(19) Europäisches Patentamt / European Patent Office / Office européen des brevets

(11) **EP 3 915 397 B1**

(12) **EUROPEAN PATENT SPECIFICATION**

(45) Date of publication and mention
of the grant of the patent:
**20.11.2024 Bulletin 2024/47**

(51) International Patent Classification (IPC):
**A23L 27/00** (2016.01)     **A23L 27/30** (2016.01)

(52) Cooperative Patent Classification (CPC):
**A23L 27/88; A23L 27/31**

(21) Application number: **20176313.3**

(22) Date of filing: **25.05.2020**

(54) **USE OF A SWEET PROTEIN FOR EHANCING THE SWEET TASTE AND/OR SWEET QUALITY**

VERWENDUNG EINES SÜSSEN PROTEINS ZUR VERBESSERUNG DES SÜSSEN GESCHMACKS UND/ODER DER SÜSSEN QUALITÄT

UTILISATION D'UNE PROTÉINE SUCRÉE POUR AMÉLIORER LE GOÛT SUCRÉ ET/OU LA QUALITÉ SUCRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.12.2021 Bulletin 2021/48**

(73) Proprietor: **BRAIN Biotech AG**
**64673 Zwingenberg (DE)**

(72) Inventors:
• **RIEDEL, Katja**
**64665 Alsbach-Hähnlein (DE)**
• **KROHN, Michael**
**64653 Lorsch (DE)**
• **RUDERT, Kerstin**
**64646 Heppenheim (DE)**
• **BRIAND, Loïc**
**21850 Saint Apollinaire (FR)**
• **NEIERS, Fabrice**
**21110 Pluvaut (FR)**

(74) Representative: **Daniels, Stefanie Lisa**
**IP2 Patentanwalts GmbH**
**Schlossstraße 523-525**
**41238 Mönchengladbach (DE)**

(56) References cited:
**WO-A1-00/61759      WO-A1-2013/041236**

WO-A1-2013/153090     WO-A1-2016/103163
WO-A1-2019/173541     WO-A1-2020/205978
WO-A1-99/25835        US-A1- 2020 107 567

• **NICOLAS POIRIER ET AL: "Efficient Production and Characterization of the Sweet-Tasting Brazzein Secreted by the Yeast Pichia pastoris", JOURNAL OF AGRICULTURAL AND FOOD CHEMISTRY, vol. 60, no. 39, 3 October 2012 (2012-10-03), US, pages 9807 - 9814, XP055766542, ISSN: 0021-8561, DOI: 10.1021/jf301600m**
• **SHANSHAN MENG ET AL: "Expression of sweet protein Brazzein in Pichia pastoris and its application.", FOOD AND FERMENTATION INDUSTRIES, vol. 46, no. 15, 24 April 2020 (2020-04-24), pages 21 - 26, XP055766598, ISSN: 0253-990X, DOI: 10.13995/j.cnki.11-1802/ts.023943**
• **FABRICE NEIERS ET AL: "Comparison of Different Signal Peptides for the Efficient Secretion of the Sweet-Tasting Plant Protein Brazzein in Pichia pastoris", LIFE, vol. 11, no. 1, 1 January 2021 (2021-01-01), pages 46, XP055766528, DOI: 10.3390/life11010046**

Remarks:
The complete document including Reference Table(s) and the Sequence Listing(s) can be downloaded from the EPO website

**Description**

**AREA OF INVENTION**

The present invention primarily relates to the use of brazzein for enhancing the sweet taste and/or the sweet quality of sweet-tasting substances. The invention thus primarily relates to the use of said substance as sweetness enhancers. The invention also relates to specific preparations which contain an effective amount of brazzein and further sweet tasting substances.

**BACKGROUND OF THE INVENTION**

Foods (nourishment, including beverages) or semi-luxury foods (semi-luxuries) which have a high sugar content (primarily sucrose, lactose, glucose or fructose or mixtures thereof) are usually strongly preferred by consumers because of their sweetness. On the other hand, it is generally known that a high content of easily metabolisable carbohydrates allows the blood sugar level to greatly increase, leads to the formation of fatty deposits and can ultimately lead to health problems, such as excess weight, obesity, insulin resistance, late-onset diabetes and their secondary diseases.

To overcome these unwanted disadvantages considerable research efforts and expenditures have been made to develop alternative compounds, e.g. as substitute for the naturally occurring sweeteners or synthetic sweeteners which have no food value and are free of caloric input.

While these artificial sweeteners enjoyed a wide use, and fulfilled the requirements of a sweet taste with no food value, and could be used without providing calories or damaging teeth, they were frequently found to possess inherent disadvantages that prevented their use for their intended purpose, e.g. because of their toxicity (p-ethoxyphenylurea) or chromosome damage and bladder trouble (sodium cyclamate). Thus, these sweeteners could not be safely recommended for use as a sweetener and are apparently unacceptable for consumption. Saccharin compounds are also commonly used as artificial sweeteners, since cyclamates have been come under governmental restrictions. Although saccharin compounds possess sweetness characteristics, they are undesirable as the sole sweetening agent in most food and beverage compositions because of the lingering bitter aftertaste perceived by most users. While saccharin and the cyclamates have been in common use as artificial sweetening agents for a number of years, there has been more recently discovered a series of new artificial sweeteners.

While, owing to their low concentration in use, the non-nutritive, highly intensive sweeteners are very suitable for bringing sweetness into foods, they also often exhibit taste-related problems as a result of time-intensity profiles which are not similar to sugar (e.g. sucralose, stevioside, cyclamate), a bitter and/or astringent aftertaste (e.g. acesulfame K, saccharin), or pronounced additional flavour impressions (e.g. glycyrrhetinic acid ammonium salt).

An improvement in the taste properties, in particular the aftertaste problem of non-nutritive, highly intensive sweeteners, can be achieved by the use of tannic acid, e.g. as described in WO 98/20753, or phenolic acids as in US 3,924,017. However, substances of this type are not particularly stable in applications owing to their catechol units. WO2016/103163 describes the use of a sweetness enhancing compound, including brazzein, to synergistically enhance the sweetness of a sweet-tasting substance selected from a list including each of sucrose, sucralose, acesulfam-K, cyclamate, saccharin, glucose, fructose, lactose and xylitol. However, the sweetness enhancing compound is used therein at concentrations of at least 0.1%, i.e. 1000 mg/L.

It is therefore desirable to find naturally occurring substances which, in low concentrations, effectively enhance the sweet taste impressions of sweet substances, in particular the sweet taste impression of reduced-sugar foods and semi-luxury foods, without adversely affecting the remaining flavour profile. The primary object of the present invention was to find substances which (a) are selectively suitable for enhancing the sweet taste of a sweet-tasting substance, preferably without adversely affecting the remaining flavour profile and (b) can be widely used.

**DESCRIPTION OF THE INVENTION**

A first object of the present invention refers to the use of the sweet protein brazzein for enhancing the sweet taste and/or the sweet quality of a sweet-tasting substance.

The sweet taste and/or the sweet quality of a sweet-tasting substance is preferably enhanced in a preparation used for pharmaceuticals, nourishment, oral hygiene or consumption. In a more preferred embodiment according to the invention, the sweet taste and/or the sweet quality of a sweet-tasting substance is enhanced in food and/or beverage preparations.

In another embodiment according to the invention, the concentration of brazzein to be used according to the invention for enhancing the sweet taste and/or the sweet quality of a sweet-tasting substance, preferably in food and/or beverage preparations, is from about 1 mg/L to about 100 mg/L, based on the total preparation. In other words, the concentration of brazzein in food and/or beverage preparations is from about 1 ppm to about 100 ppm, based on the total preparation.

Sweet-tasting substances (including natural sources of these substances) can for example be sweet-tasting carbohydrates or sugars (e.g. sucrose (synonymous with saccharose), trehalose, lactose, maltose, melizitose, raffinose, palatinose, lactulose, D-fructose, D-glucose, D-galactose, L-rhamnose, D-sorbose, D-mannose, D-tagatose, D-arabinose, L-arabinose, D-ribose, D-glyceraldehyde, maltodextrin) or vegetable preparations containing predominantly these carbohydrates (e.g. from sugar beet (Beta vulgaris ssp., sugar fractions, sugar syrup, molasses), from sugar cane (Saccharum officinarum ssp., e.g. molasses, sugar syrups), from sugar maple (Acer ssp.), from agave (agave thickjuice), synthetic/enzymatic hydrolysates of starch or sucrose (e.g. invert sugar syrup, highly enriched fructose syrupsmade from corn starch), fruit concentrates (e.g. from apples or pears, apple syrup, pear syrup), sugar alcohols (e.g. erythritol, threitol, arabitol, ribitol, xylitol, sorbitol, mannitol, dulcitol, lactitol), proteins (e.g. miraculin, monellin, thaumatin, curculin), sweeteners (magap, sodiumcyclamate, acesulfame K, neohesperidin dihydrochalcone, saccharinsodium salt, advantame, aspartame, superaspartame, neotame, alitame, sucralose, stevioside, rebaudioside, lugduname, carrelame, sucrononate, sucrooctate, monatin, phyllodulcin), certain sweet-tasting amino acids (glycine, D-leucine, D-threonine, D-asparagine, D-phenylalanine, D-tryptophan, L-proline), other sweet-tasting low-molecular substances (e.g. hernandulcin, dihydrochalcone glycosides, glycyrrhizin, glycyrrhetinic acid ammonium salt or other glycyrrhetinic acid derivatives), liquorice extracts (Glycyrrhizza glabra ssp.), Lippia dulcis extracts, Momordica ssp. extracts or individual substances (in particular Momordica grosvenori [Luo Han Guo] and the mogrosides obtained therefrom), Hydrangea dulcis or Stevia ssp. (e.g. Stevia rebaudiana) extracts or individual substances.

Brazzein is a sweet-tasting protein extracted from the West African fruit of the climbing plant Oubli (Pentadiplandra brazzeana Baillon). It was first isolated by the University of Wisconsin-Madison in 1994. Like other sweet proteins discovered in plants, such as monellin and thaumatin, it is extremely sweet compared to commonly used sweeteners (500 to 2000 times sweeter than sucrose).

While The Wisconsin Alumni Research Foundation describes brazzein and its characteristics as sweetener in various patent applications (for example: WO 0061759, US 7,153,535, WO 9419467, WO9531547), a sweet-enhancing effect and/or an improvement of sweetness quality cannot derived therefrom. A more general review of sweeteners and sweetness enhancers can be found in FOOD SCI. TECHNOL. 38(2): 181-187 (2018).

Surprisingly it has been found that brazzein to be used according to the invention synergistically increases the sweet taste impression of sweet-tasting substances, in particular however of sugars and sweeteners such as sucrose, sucralose, acesulfam-K, Na-cyclamate, saccharin, , glucose, fructose, lactose, xylit and it is thus possible to reduce the sugar and/or sweetener content in corresponding foods and semi-luxury foods without reducing the sweet taste impression at the same time.

In other words, the inventors have surprisingly found that brazzein to be used according to the invention enhances the sweet taste of a sweet-tasting substance synergistically, in particular however of sugars and sweeteners such as sucrose, sucralose, acesulfam-K, Na-cyclamate, saccharin, glucose, fructose, lactose, xylit,

The term "rebaudiosides" includes all types of known rebaudiosides, such as for example RebA, RebD or RebM or mixtures thereof. The preferred rebaudiosides are RebM and RebD.

As already mentioned, one aspect of the present invention relates to the use of brazzein for enhancing the sweet quality of a sweet-tasting substance In the sense of the present invention "enhancing the sweet quality of a sweet-tasting substance" is to be understood as enhancing the taste quality and/or the mouthfeel of sweet-tasting substances. For example, when brazzein is used according to invention and enhances the "taste quality" of a sweet-tasting substance, brazzein functions as a taste corrigent. The term "mouthfeel" refers to the physical sensations in the mouth caused by a substance, as distinct from taste. It is a fundamental sensory attribute which, along with taste and smell, determines the overall flavor of, in particular, a food item. Mouthfeel is also sometimes referred to as texture. Brazzein according to the invention is preferably used in a preparation used for nourishment, oral hygiene or consumption, wherein the preparation includes one or more sweet-tasting substance(s). In a preferred embodiment according to the invention, brazzein is used in food and/or beverage preparations.

The sweet protein "brazzein" according to the present invention refers either to the plant-derived protein brazzein and/or to the recombinant brazzein obtainable by a process according to the present invention. It goes without saying that the plant-derived protein brazzein is extracted and concentrated before the use according to the present invention. Common methods for extraction and concentration are well known by the person skilled in the art. In a preferred embodiment according to the invention the term "brazzein" refers to the recombinant brazzein obtainable by a process according to the present invention, which is described below.

A further aspect described herein relates to food and/or beverage preparation, comprising or consisting of the following components:

(a) the recombinant brazzein obtainable by a process according to the present invention,
(b) one or more further sweet-tasting substances, wherein the further sweet-tasting substance are selected from the group comprising:

(i) one or more carbohydrate(s) selected from the group comprising sucrose, trehalose, lactose, maltose, melizitose, melibiose, raffinose, palatinose, lactulose, D-fructose, D-glucose, D-galactose, L-rhamnose, D-sorbose, D-mannose, D-tagatose, D-arabinose, L-arabinose, D-ribose, D-glyceraldehyde, maltodextrin and vegetable preparations containing one or more of said carbohydrate(s),

(ii) one or more sugar alcohol(s) selected from the group comprising glycerol, erythritol, threitol, arabitol, ribitol, xylitol, sorbitol, mannitol, dulcitol and lactitol,

(iii) one or more protein(s) and/or amino acid(s) from the group comprising miraculin, monellin, thaumatin, glycine, D-leucine, D-threonine, D-asparagine, D-phenylalanine, D-tryptophan, L-proline,

(iv) one or more sweetener(s) from the group comprising saccharin, advantame, magap, sodium cyclamate, acesulfame K, neo-hesperidin dihydrochalcone, aspartame, superaspartame, neotame, alitame, sucralose, stevioside, rebaudioside, lugduname, carrelame, sucrononate, sucrooctate, monatin and phyllodulcin, and mixtures thereof.

It is therefore possible to reduce the content of one or more of the sweet-tasting substance(s), but in particular of sugars such as sucrose, lactose, fructose and/or glucose or the mixtures thereof by 3 to 50 % (based on the sweet-tasting substance(s)), compared to a preparation without brazzein.

Preferred therefore are (sugar- and/or sweetener-reduced) preparations which as a sweet-tasting substance or sweet-tasting substances include one or more sugar(s) and/or sweetener(s), wherein the quantity of brazzein is sufficient to impart the same or an enhanced sweet impression and/or an enhanced sweet quality, compared with a preparation which, with an otherwise identical composition, contains no brazzein but at least 1.03 times, preferably at least 1.1 times, the amount of sugar and/or sweetener. The one or more sweet-tasting substances are selected from the group comprising (i) one or more carbohydrate(s) selected from the group comprising sucrose, trehalose, lactose, maltose, melizitose, melibiose, raffinose, palatinose, lactulose, D-fructose, D-glucose, D-galactose, L-rhamnose, D-sorbose, D-mannose, D-tagatose, D-arabinose, L-arabinose, D-ribose, D-glyceraldehyde, maltodextrin andvegetable preparations containing one or more of said carbohydrate(s), (ii) one or more sugar alcohol(s) selected from the group comprising glycerol, erythritol, threitol, arabitol, ribitol, xylitol, sorbitol, mannitol, dulcitol and lactitol, (iii) one or more protein(s) and/or amino acid(s) from the group comprising miraculin, monellin, thaumatin, glycine, D-leucine, D-threonine, D-asparagine, D-phenylalanine, D-tryptophan, L-proline, (iv) one or more sweetener(s) from the group comprising saccharin, advantame, magap, sodium cyclamate, acesulfame K, neo-hesperidin dihydrochalcone, aspartame, superaspartame, neotame, alitame, sucralose, steviosides, rebaudiosides, lugduname, carrelame, sucrononate, sucrooctate, monatin and phyllodulcin, and mixtures thereof. The sugars and/or sweeteners are preferably selected in this case from the group comprising or consisting of sucrose, sucralose, acesulfam-K, Na-cyclamate, saccharin, advantame, glucose, fructose, lactose, xylit, rebaudiosides, preferably RebM and mixtures thereof.

Reference has already been made above to the fact that brazzein occurs in natural products i.e. in the plant *Pentadiplandra brazzeana.* However, the preparations described herein are not naturally occurring products of this type. It should be noted in this regard that in the naturally occurring products the quantity of brazzein is usually not sufficient to significantly enhance in sensory terms the sweet taste impression of a substance in the naturally occurring product. Furthermore, it is to be noted that brazzein to be used in a preferred embodiment according to the present invention is not the naturally occurring protein but a recombinant protein, obtainable by a process comprising or consisting of the following steps:

(a) Fusing nucleic acid sequence encoding brazzein according to SEQ ID NO.1 to a mating factor alpha of *Saccharomyces cerevisiae* to receive a heterologous gene sequence (SEQ ID NO. 3);
(b) Integration of the heterologous gene sequence of step (a) into a vector;
(c) Introducing at least one copy of the vector of step (b) into the AOX locus of the genome of *Pichia pastoris;*
(d) Selection of the cells which have taken up the vector containing the heterologous gene sequence;
(e) Collecting the secreted recombinant brazzein.

In a preferred embodiment brazzein is expressed under control of the AOX promoter. According to the above statements, in a preparation according to the invention the brazzein is preferably not in the form of (a) an exudate of the plant *Pentadiplandra brazzeana,* and is not present (b) together with other exudates of this plant.

Particularly relevant are preparations which include at least one sweet-tasting substance, preferably sucrose, sucralose, acesulfam-K, Na-cyclamate, saccharin, advantame, glucose, fructose, lactose, xylit or rebaudiosides, preferably RebM or mixtures thereof, wherein the quantity of sweet-tastings substance is not sufficient to be perceived in a comparative preparation, which does not include brazzein but otherwise has an identical composition, as a satisfactory sweet taste, and the quantity of brazzein in the preparation is sufficient to enhance in sensory terms the sweet taste impression and/or the sweet quality of the sweet-tasting substance.

The preparations used for nourishment or consumption are e.g. bread, cakes and pastries (e.g. bread, biscuits, cake, other bakery items), confectionery (e.g. chocolates, chocolate bar-type products, other bar-type products, fruit gums, hard and soft toffees, chewing gum), alcoholic or non-alcoholic drinks (e.g. coffee, tea, wine, wine-containing drinks, beer, beer-containing drinks, liqueurs, schnapps, brandies, fruit-containing soft drinks, isotonic drinks, soft drinks, nectars, fruit and vegetable juices, fruit or vegetable preparations), instant drinks (e.g. instant cocoa drinks, instant tea drinks, instant coffee drinks), meat products (e.g. ham, fresh sausage or raw sausage preparations, pickled or marinated fresh or salt meat products), eggs or egg products (dried egg, egg white, egg yolk), cereal products (e.g. breakfast cereals, muesli bars, pre-cooked finished rice products), milk products (e.g. milk drinks, dairy ice cream, yoghurt, kefir, cream cheese, soft cheese, hard cheese, dried milk powder, whey, butter, buttermilk, partially or wholly hydrolysed milk protein-containing products), products made of soya protein or other soybean fractions (e.g. soya milk and products produced therefrom, soya lecithin-containing preparations, fermented products such as tofu or tempe or products produced therefrom, soya sauces), fruit preparations (e.g. preserves, sorbets, fruit sauces, fruit fillings), vegetable preparations (e.g. ketchup, sauces, dried vegetables, frozen vegetables, pre-cooked vegetables, vegetables pickled in vinegar, preserved vegetables), snacks (e.g. backed or fried potato crisps or potato dough products, bread dough products, extrudates based on maize or peanut), products based on fat or oil or emulsions thereof (e.g. mayonnaise, remoulade, dressings, spice preparations), other ready-to-eat meals and soups (e.g. dried soups, instant soups, pre-cooked soups), condiments, spice mixtures and in particular seasonings which are used for example in the snacks sector.

Preparations can be in the form of semi-finished products, perfume, flavouring or flavour compositions or a spice mixture.

Preparations which are used as semi-finished products preferably contain a total of 0.00001 %o by weight to 5 % by weight, preferably 0.0001 %o to 0.5 % by weight, but in particular 0.001 %o by weight to 0.05 % by weight, based on the total weight of the preparation, of brazzein to be used according to the invention.

Preparations in another embodiment which are used as semi-finished products preferably contain a total of 0.01 mg/L to about 50 000 mg/L, preferably from about 0.1 mg/L to about 5000 mg/L and most preferably from about 1 mg/L to about 500 mg/L, based on the total preparation, of brazzein to be used according to the invention. In other words, preparations which are used as semi-finished products preferably contain a total of 0.01 ppm to about 50 000 ppm, preferably from about 0.1 ppm to about 5000 ppm and most preferably from about 1 ppm to about 500 ppm, based on the total preparation, of brazzein to be used

Preparations can in particular be used as semi-finished products for producing further preparations used for nourishment or consumption, in particular in spray-dried or freeze-dried form. Preparations can also be in the form of capsules, tablets (uncoated and coated tablets, e.g. gastric juice-resistant coatings), sugar-coated pills, granules, pellets, solid mixtures, dispersions in liquid phases, emulsions, powders, solutions, pastes, concentrates or sirups or other preparations that may be swallowed or chewed as food supplements.

The preparations used for oral hygiene are in particular oral and/or dental care products, such as toothpastes, tooth gels, tooth powder, mouthwashes, chewing gums and other oral hygiene products.

Further conventional active ingredients, raw materials, auxiliaries and additives for preparations used for nourishment, oral hygiene or consumption can be provided in quantities of 5 to 99.999999 % by weight, preferably 10 to 80 % by weight, based on the total weight of the preparation. The preparations may also contain water in a quantity up to 99.999999 % by weight, preferably 5 to 80 % by weight, based on the total weight of the preparation.

The preparations containing brazzein are produced according to a preferred embodiment by incorporating brazzein as a substance, as a solution (e.g. in ethanol, water, 1,2-propylene glycol, dimethylsulphoxide) or in the form of a mixture with a solid or liquid carrier (e.g. maltodextrin, starch, silica gel), flavours or flavourings and optionally further auxiliaries and/or stabilisers (e.g. natural or synthetic polysaccharides and/or plant gums, such as modified starches or gum arabic) in a base preparation used for nourishment, oral hygiene or consumption. Preparations in the form of a solution and/or suspension or emulsion may advantageously also be converted by spray drying into a solid preparation according to the invention (semi-finished product).

Solid preparations, either freeze-dried or spray dried, preferably contain 0.1 to 90 % by weight brazzein, based on the total weight of the preparation, 0 to 90 % by weight of other flavours, in particular other sweet tasting compounds, based on the total weight of the preparation, 1 to 99 % by weight carriers, based on the total weight of the preparation, and 0 to 70 % by weight of further auxiliaries and/or stabilisers, based on the total weight of the preparation. The spray-dried or freeze-dried, solid preparations are particularly suitable as semi-finished products.

In a preferred embodiment the preparations are food and/or beverage preparations. Further preferred are food and/or beverage preparations, which comprise as further sweet-tasting substances one or more sugars and/or sweeteners, wherein the total quantity of the recombinant brazzein in the preparation is sufficient to impart an enhanced sweet impression and/or an enhanced sweet quality, compared with a preparation or semi-finished product which, with an otherwise identical composition, contains no recombinant brazzein but at least 1.03 times to 1.5, preferably at least 1.03 times to at least 1.1 the amount of sugars and/or sweeteners.

In an embodiment according to the invention, the concentration of recombinant brazzein is more than 1 mg/L, based on the total preparation.

In a further embodiment according to the invention, the preparation comprises a total quantity in the range of up . to 100 mg/L, of the recombinant brazzein, based on the total weight of the preparation.

For producing further preparations the solubility of the brazzein to be used according to the invention is significantly improved by the carriers and/or auxiliaries as described above, in particular by maltodextrin, starch, natural or synthetic polysaccharides and/or plant gums, such as modified starches or gum arabic. The spray-dried or freeze-dried, solid preparations preferably contain 50 to 95 % by weight carriers, in particular maltodextrin and/or starch, 5 to 40 % auxiliaries, preferably natural or synthetic polysaccharides and/or plant gums, such as modified starches or gum arabic, and 1 to 45 % brazzein.

According to a further preferred embodiment brazzein to be used according to the invention and optionally other constituents of the preparation are incorporated into emulsions, liposomes, e.g. starting from phosphatidylcholine, microspheres, nanospheres or in capsules, granules or extrudates of a matrix suitable for foods and semi-luxury foods, e.g. of starch, starch derivates (e.g. modified starch), cellulose or cellulose derivates (e.g. hydroxypropyl cellulose), other polysaccharides (e.g. dextrin, alginate, curdlan, carrageenan, chitin, chitosan, pullulan), natural fats, natural waxes (e.g. beeswax, carnauba wax), of proteins, e.g. gelatines or other natural products (e.g. shellac), to produce preparations Depending on the carriers/auxiliaries the products may also be obtained by spray drying, spray granulation, melt granulation, coacervation, coagulation, extrusion, melt extrusion, emulsion processes, coating or other suitable encapsulation processes and optionally a suitable combination of said processes.

Another embodiment is a preparation in which the matrix is selected such that brazzein is liberated from the matrix with a delay, so a long-lasting effect is achieved. Particularly preferred is a fat, wax, polysaccharide or protein matrix in this regard.

As further constituents for preparations used for nourishment or consumption, conventional raw materials, auxiliaries and additives for foods or semi-luxury foods can be used, e.g. water, mixtures of fresh or processed, vegetable or animal basic or raw materials (e.g. raw, roasted, dried, fermented, smoked and/or cooked meat, bones, cartilage, fish, vegetables, fruits, herbs, nuts, vegetable or fruit juices or pastes or mixtures thereof), digestible or non-digestible carbohydrates (e.g. saccharose, maltose, fructose, glucose, dextrins, amylose, amylopectin, inulin, xylanes, cellulose, tagatose), sugar alcohols (e.g. sorbitol, erythritol), natural or hardened fats (e.g. tallow, lard, palm butter, coconut oil, hydrogenated vegetable fat), oils (e.g. sunflower oil, groundnut oil, maize oil, olive oil, fish oil, soya oil, sesame oil), fatty acids or the salts thereof (e.g. potassium stearate), proteinogenic or non-proteinogenic aminoacids and related compounds (e.g. y-aminobutyric acid, taurine), peptides (e.g. gluthathion), natural or processed proteins (e.g. gelatines), enzymes (e.g. peptidases), nucleic acids, nucleotides, taste corrigents for unpleasant taste impressions, further taste modulators for further, generally not unpleasant taste impressions, other taste-modulating substances (e.g. inositolphosphate, nucleotides, such as guanosinmonophosphate, adenosinmonophosphate or other substances, such as sodium glutamate or 2-phenoxypropionic acid), emulsifiers (e.g. lecithins, diacylglycerols, gum arabic), stabilisers (e.g. carrageenan, alginate), preservatives (e.g. benzoic acid, sorbinic acid), antioxidants (e.g. tocopherol, ascorbic acid), chelators (e.g. citric acid), organic or inorganic acids (e.g. malic acid, acetic acid, citric acid, tartaric acid, phosphoricacid), bitter principles (e.g. quinine, caffeine, limonine, amarogentine, humolone, lupolone, catechins, tannins), mineral salts (e.g. sodium chloride, potassium chloride, magnesium chloride, sodium phosphates), substances preventing enzymatic browning (e.g. sulphite, ascorbic acid), etheric oils, plant extracts, natural or synthetic colourings or colouringpigments (e.g. carotinoids, flavonoids, anthocyans, chlorophyll and the derivates thereof), spices, trigeminally active substances or plant extracts containing such trigeminally active substances, synthetic, natural or nature-identical flavourings or perfumes and odour corrigents.

Preparations which are in the form of semi-finished products can be used to enhance the sweet taste impression and/or the sweet quality of ready-to-use preparations which are produced using the semi-finished product preparation.

The present disclosure also relates to a process for enhancing the sweet taste and/or the sweet quality of a sweet-tasting substance, comprising or consisting of the following steps: mixing a sweet-tasting substance with a quantity of brazzein which is sufficient to enhance in sensory terms the sweet taste impression and/or the sweet quality of the sweet-tasting substance(s).

See above for preferred quantities of brazzein. A concentration of at least 1 ppm is often particularly preferred.

Of course, brazzein is preferably not in the form of (a) an exudate of the plant *Pentadiplandra brazzeana,* and is not present (b) together with other exudates of this plant either in the process according to the invention.

For a better overview, the following sequences are provided:

**SEQ ID No. 1** shows the amino acid sequence of brazzein.
**SEQ ID No. 2** shows the nucleic acid sequence encoding brazzein.
**SEQ ID No. 3** shows the nucleic acid sequence encoding brazzein with alpha mating factor.
**SEQ ID No. 4** shows the nucleic acid sequence encoding brazzein under control of AOX-promoter.

**SHORT DESCRIPTION OF FIGURES**

**Fig 1.** Mobilization of intracellular calcium by stimulation with recombinant brazzein (BZE), sucrose, sucralose and mixtures thereof. Negative control is HBBS buffer. Positive control 1 μM advantame. The data were normalized to the positive control (100%).

**Fig. 2** Mobilization of intracellular calcium by stimulation with recombinant brazzein (BZE), and co-application of BZE with 25 mM sucrose. Normalized to positive control and corrected for negative control.

**Fig. 3** Mobilization of intracellular calcium by stimulation with recombinant brazzein (BZE), and co-application of BZE with 0.25 mM sucralose. Normalized to positive control and corrected for negative control.

**Fig. 4** Mobilization of intracellular calcium over time by stimulation at 20 seconds. [A] 25mM sucrose, [B] 25mM sucrose + 20mg/l brazzein, [C] 20mg/l brazzein, [D] positive control (advantame, 1 μM).

**Fig. 5** Mobilization of intracellular calcium by stimulation with recombinant brazzein (BZE), and co-application of BZE with 25 mM fructose. Normalized to positive control and corrected for negative control.

**Fig. 6** Mobilization of intracellular calcium by stimulation with recombinant brazzein (BZE), and co-application of BZE with 25 mM glucose. Normalized to positive control and corrected for negative control.

**Fig. 7** Mobilization of intracellular calcium by stimulation with recombinant brazzein (BZE), and co-application of BZE with 25 mM D(+)-Lactose. Normalized to positive control and corrected for negative control.

**Fig. 8** Mobilization of intracellular calcium by stimulation with recombinant brazzein (BZE), and co-application of BZE with 25 mM maltose. Normalized to positive control and corrected for negative control.

**Fig. 9** Mobilization of intracellular calcium by stimulation with recombinant brazzein (BZE), and co-application of BZE with 20 μM RebM. Normalized to positive control and corrected for negative control.

**Fig. 10** Mobilization of intracellular calcium by stimulation with recombinant brazzein (BZE), and co-application of BZE with 1 mM saccharine. Normalized to positive control and corrected for negative control.

**Fig. 11** Mobilization of intracellular calcium by stimulation with recombinant brazzein (BZE), and co-application of BZE with 3 mM acesulfame K. Normalized to positive control and corrected for negative control.

**Fig. 12** Mobilization of intracellular calcium by stimulation with recombinant brazzein (BZE), and co-application of BZE with 1 mM Na-cyclamate. Normalized to positive control and corrected for negative control.

**Fig. 13** Mobilization of intracellular calcium by stimulation with recombinant brazzein (BZE), and co-application of BZE with 25 mM xylite. Normalized to positive control and corrected for negative control.

**Fig. 14** Mobilization of intracellular calcium by stimulation with recombinant brazzein (BZE), and co-application of BZE with 25 mM cellobiose. Normalized to positive control and corrected for negative control.

**EXAMPLES**

**Example 1: Fermentation of Pichia Pastoris CBS7435 for Brazzein production**

This is the description for the fermentation process of Pichia pastoris CBS7435 using two consecutive exponential fed batch phases producing the sweet protein brazzein.

**Field of application**

The presented process specifies a method for production of brazzein using a modification of the pPpT4 vector under the control of the AOX1 promotor in *Pichia pastoris.* The pPpT4 vector is designed to produce brazzein when methanol is catabolized. For secretion, the alpha factor from *Saccharomyces cerevisiae* is used. The produced peptide has a size of 6362 Da (des pyrE bra).

**Materials and methods**

The following tables show the used materials.

**Table 1: Medium:**

| Substance | Weight [g] for 1000mL | CAS number |
|---|---|---|
| Glycerol, technical | 40.0 | 56-81-5 |
| Citric acid·$1H_2O$ | 2.0 | 5949-29-1 |
| $CaCl_2$ * $1H_2O$ | 0.022 | 10035-04-8 |
| $(NH_4)_2HPO_4$ | 12.4 | 7783-28-0 |
| KCl | 0.9 | 7447-40-7 |
| $K_2SO_4$ | 14.3 | 7778-80-5 |

Adjust pH to 6.5 before autoclaving. After sterilization, add 5mL from 2M $MgSO_4$ stock solution (making 2.5g/L $MgSO_4$) and 1mL/L PTM1 trace element solution.

**Table 2: Magnesium stock solution (2M):**

| Substance | Weight [g] for 1000mL | CAS number |
|---|---|---|
| $MgSO_4$ ·$7H_2O$ | 492.96 | 10034-99-8 |

**Table 3: PTM1 trace element solution (1000x):**

| Substance | Weight [g] for 1000mL | CAS number |
|---|---|---|
| $CuSO_4$ ·$5H_2O$ | 6.0 | 7758-99-8 |
| KI | 0.8 | 7681-11-0 |
| $MnSO_4$·$H_2O$ | 3.0 | 10034-96-5 |
| $Na_2MoO4$·$2H_2O$ | 0.2 | 10102-40-6 |
| $H_3BO_3$ | 0.2 | 10043-35-3 |
| $CaSO_4$·$2H_2O$ | 0.5 | 10101-41-4 |
| $ZnCl_2$ | 20.0 | 7646-85-7 |
| $FeSO_4$·$7H_2O$ | 65.0 | 7782-63-0 |
| biotin | 0.2 | 58-85-5 |
| conc. $H_2SO_4$ | 5ml | 7664-93-9 |

Filter through 0.22μm sterile filter. The solution appears clear and blue.

**Table 4: Feed 1**

| Substance | Weight [g] for 1000mL | CAS number |
|---|---|---|
| Glycerol, technical | 800 | 56-81-5 |
| $H_2O$ | 200 | |

Add 4ml/L PTM1 stock solution after autoclaving.

**Table 5: Feed 2:**

| Substance | Weight [g] for 1000mL | CAS number |
|---|---|---|
| Methanol, technical | 1000 | 67-56-1 |

Add 4ml/L PTM1 stock solution after autoclaving.

**Table 6: pH adjusting agents:**

| Substance | Concentration [%] | CAS number |
|---|---|---|
| $NH_4^+$, technical | 25 | 1336-21-6 |
| $H_3PO_4$ | 85 | 7664-38-2 |

**Procedure**

Preculture: The precultures are inoculated from a cryo working cell bank (WCB). 30 ml medium are filled into two 300 ml shake flasks with baffles, each flask is inoculated with 1800 $\mu$l cryo culture and incubated at 30°C and 250 rpm overnight.

Bioreactor is inoculated with preculture suspension to reach $OD_{600}$.

Fermentation parameters: The vessel is assembled and prepared for the cultivation. Aeration is realized through a sparging ring for aeration and an off gas cooler, both led through 0.22 $\mu$m filters. Agitation is performed with two Rushton impellers. For temperature control at 34°C, a Pt-100 element is inserted via a hull. For sampling, a sampling tube is included. A septum is provided to enable sterile additions to the batch medium after sterilization.

Off gas analysis for $O_2$ and $CO_2$ is performed using BlueSens sensors.

The batch medium consists of 1.0L of medium plus PPG as anti-foaming agent. PPG is provided in a syringe for manual addition of anti-foam agent if needed.

The pH and $pO_2$ sensors are calibrated (pH 4 and 7, respectively, 95% pO2 with starting conditions). During cultivation, the pH is adjusted within a 0.05 pH-unit range. The pO2 value is kept above 20% for minimization of oxygen limitation. For this, a cascade is activated using stirrer (600 to 2000rpm), aeration (1.5 to 3.0vvm) and if needed oxygen supply (0 to 20%).

The fermentation is controlled and documented by the fermentation software MFCSwin from Sartorius Stedim Biotech. The applied recipe controls aeration control, batch end detection and feed control.

Table 7 shows the implemented parameters for the two feeds.

**Table 7: Specific feed parameters for feed I and II**

| | Feed I | Feed II |
|---|---|---|
| Substrate yield coefficient $Y_{x/s}$ | 0.58 g/g | 0.39 g/g |
| Maintenance coefficient m | 0.05 g/(g·h) | 0.02 g/(g·h) |
| Growth rate $\mu$ | 0.15 1/h | 0.015 1/h |

The feeding rate F is calculated using formula 1:

$$F(t) = \left( \frac{\mu}{Y_{x/s}} + m \right) \cdot V_0 \cdot \frac{x_0}{s^\alpha} \cdot e^{\mu \cdot t}$$

**Formula 1: Feeding rate F**

F(t)    Feed flowrate in mL/h at time point t

$\mu$    Desired growth rate

m    *maintenance coefficient*

$Y_{x/s}$    Substrate yield coefficient

$V_0$    vessel volume at the beginning of the feed

$s^{\alpha}$    Substrate concentration in feed (I or II)

$x_0$    Biomass concentration at the beginning of the feed

t    time (in hours)

**Fermentation phases**

Batch: First, a batch fermentation is realized which takes about 20h and results in an optical density of 80, respectively, CDW 25g/kg. The dissolved oxygen concentration drops to the set point where it is maintained by the $pO_2$ cascade.

Batch end detection: The end of the batch is indicated by the depletion of the carbon source detected by CER value evaluation leading to the next step in the process: the glycerol fed batch.

Glycerol fed batch: The first feeding phase consists of an exponential addition of glycerol. This phase is started by the batch end detection, thus starts with an OD 80 respectively CDW 25g/kg and ends at about OD 140 respectively a CDW of 40g/kg.

Adapting phase: Between fed batch I and II, an adapting phase is realized. The change in carbon source to methanol requires a metabolic adaption of every yeast cell. This is alleviated through a 4h phase of adding linearly 3.5g methanol per liter culture and hour.

Methanol fed batch: The last phase is an exponential methanol feed that starts immediately after the adapting phase. The feeding rate is set to a growth rate of $\mu$=0.015h$^{-1}$ resulting in a CDW of 95g/kg after 90h.

Sampling: During every phase, samples are taken to monitor the fermentation progress. The monitored parameters are the OD, CDW and the cell physiology by microscopy. The supernatant is generated by centrifugation and sterile filtration. It is used directly for product analytics by HP-SEC or/and may be stored at -20°C.

**Example 2: Sweet taste enhancement of recombinant brazzein** - **modulation of the sweet taste *in vitro***

Evidence for sweet taste enhancement of saccharose and sweeteners by brazzein in a cell based assay *in vitro* (Example 2) and by a sensory panel (Example 3). If an enhancement is evident, low caloric foodstuff and beverages can be prepared by lowering the amount of sugars yet maintaining the same or even higher sweetness.

Brazzein expression in Pichia: brazzein sequence (SEQ ID NO 2) was fused to alpha mating factor of *S. cerevisiae* and cloned into a pPpT4 vector derivative under control of the AOX promoter (SEQ ID NO 4) as described above, followed by transformation and recombinant expression.

Quantification of intracellular calcium level in cell based assay system

Cells used for in vitro cell assay were established according to Hochheimer et al., Chem. Senses. 2014 May; 39(4):359-77 (US 9,404,080 B2) and optimized for measurement of sweet molecules.

Modulation of intracellular calcium level was quantified using calcium sensitive dye Fluo-4 in a microplate reader.

Cells were cultivated cell culture medium, in a water-saturated atmosphere at 37°C and 5% $CO_2$. The cells were seeded into a 96-well plate at a density of 15,000 cells per well. The cells were stained 24 hours after seeding with 4 $\mu$M of the calcium-sensitive fluorescent dye Fluo-4 AM in HBSS (Hank's Balanced Salt Solution) buffer and the mobilization of calcium in living cells was measured in the microplate reader.

Evaluation: The mobilization of calcium was quantified as a change in fluorescence (dF) after addition of the ligands, taking into account basal fluorescence (F0) as dF/F0. The relative fluorescence units (dF/F0) measured after stimulation with mix of agonists were compared with the stimulation by the agonist alone. Thus, additive or enhancement effects increasing calcium levels were identified. Potential enhancement was repeatedly tested. The processing and analysis of the data was performed with the microplate reader software.

To detect enhancement effects, subliminal concentrations of TAS1R2/R3 agonists including brazzein, saccharose, sucralose, acesulfam-K, Na-cyclamate, saccharin, advantame, glucose, fructose, lactose, xylit or RebM, which was just below the level triggering a clear receptor response was determined by dose response measurements. Subliminal concentrations are summarized in the table below.

**Table 8.** Test concentrations of compounds in cell based assay

| Tested molecule | Concentration tested | Result |
|---|---|---|
| Recombinant brazzein (BZE) | 20 mg/L | Fig. 1 - 14 |
| Sucrose | 25 mM | Fig. 1-4 |
| Sucralose | 0.25 mM | Fig. 1 - 3 |
| Fructose | 25 mM | Fig. 5 |
| Glucose | 25 mM | Fig. 6 |
| Lactose | 25 mM | Fig. 7 |
| Maltose | 25 mM | Fig. 8 |
| Rebaudioside M | 20 $\mu$M | Fig. 9 |
| Acesulfame K | 3 mM | Fig. 11 |
| Saccharine | 1 mM | Fig. 10 |
| Na-Cyclamate | 1 mM | Fig. 12 |
| Advantame | 100 nM | not shown |
| Xylite | 25 mM | Fig. 13 |
| Cellobiose (not sweet) | 25 mM | Fig. 14 |

HBSS buffer application and the non-sweet carbohydrate cellobiose served as a negative control, for potential osmolaric effects of sucrose, glucose, fructose or lactose at 25 mM.

For standardisation of the data a positive control was used. As positive control 1 $\mu$M advantam was applied, negative control was HBSS buffer.

In the following figures results are shown.

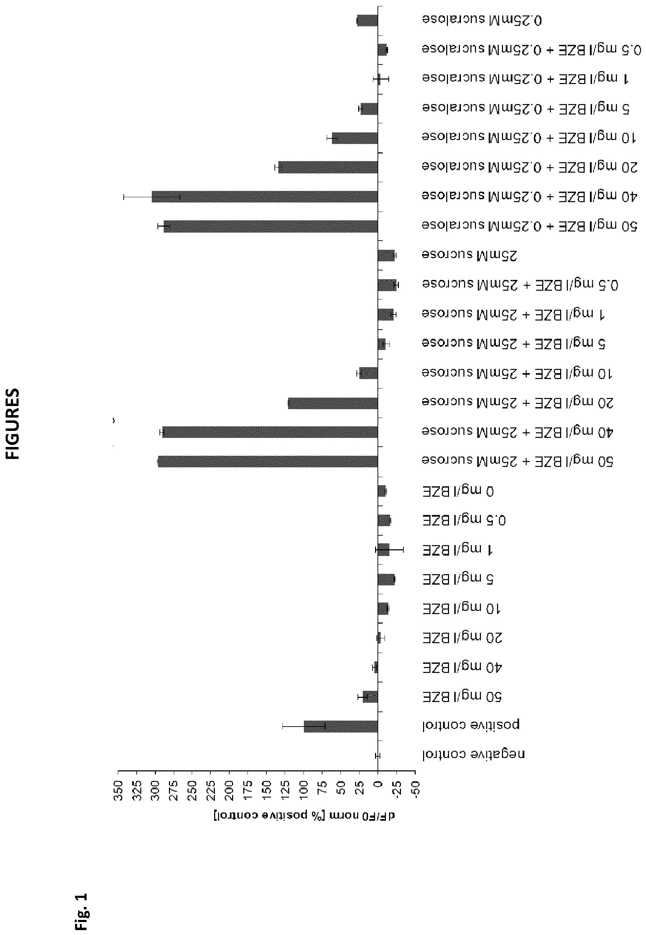

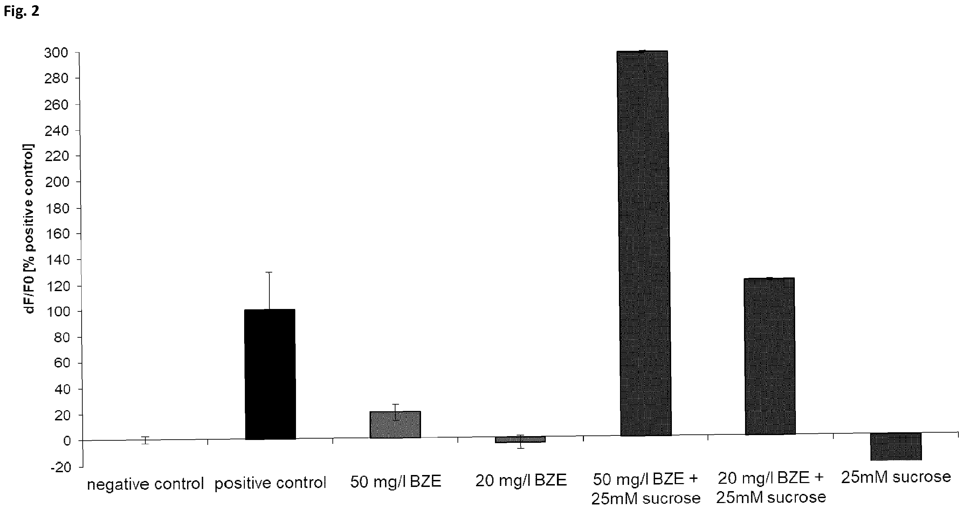

**Fig. 1** shows dose responses of recombinant brazzein (0-50 mg/L) as well as in combination with sucrose and sucralose. **Fig. 1** shows a strong increase of calcium mobilization by application of e.g. 20 mg/L brazzein plus 25 mM sucrose or 0.25 mM sucralose, respectively. Comparing the calcium mobilization induced by the molecules alone it is evident that the effect is more than additive, showing a strong enhancement effect in vitro. See also Fig. 2.

**Fig. 2** shows recombinant brazzein in combination with sucrose. **Fig. 2** shows a strong increase of calcium mobilization by application of 50 mg/L or 20 mg/L brazzein plus 25 mM sucrose. Comparing the calcium mobilization induced by the molecules alone it is evident that the effect is more than additive, showing a strong enhancement effect in vitro.

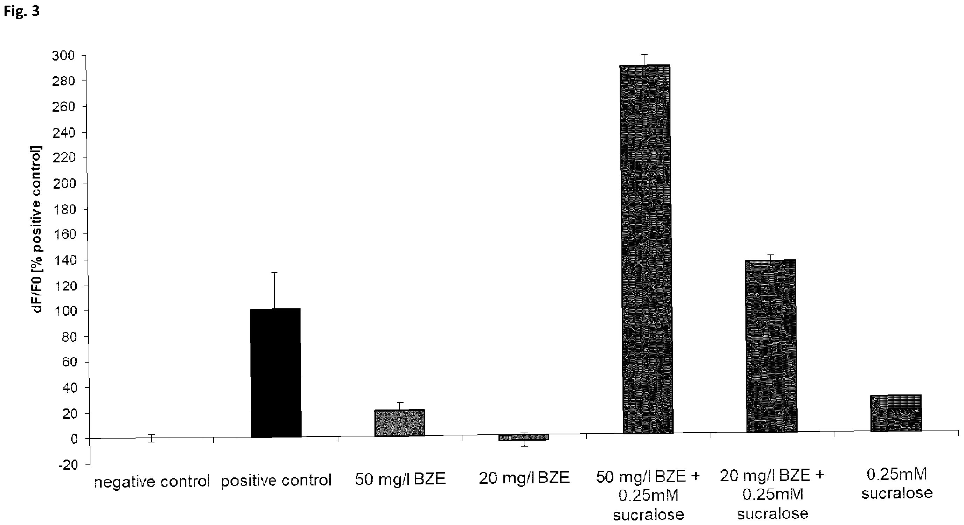

**Fig. 3** shows recombinant brazzein in combination with sucralose. **Fig. 3** shows a strong increase of calcium mobilization by application of 50 mg/L or 20 mg/L brazzein plus 0.25 mM sucralose. Comparing the calcium mobilization induced by the molecules alone it is evident that the effect is more than additive, showing a strong enhancement effect in vitro.

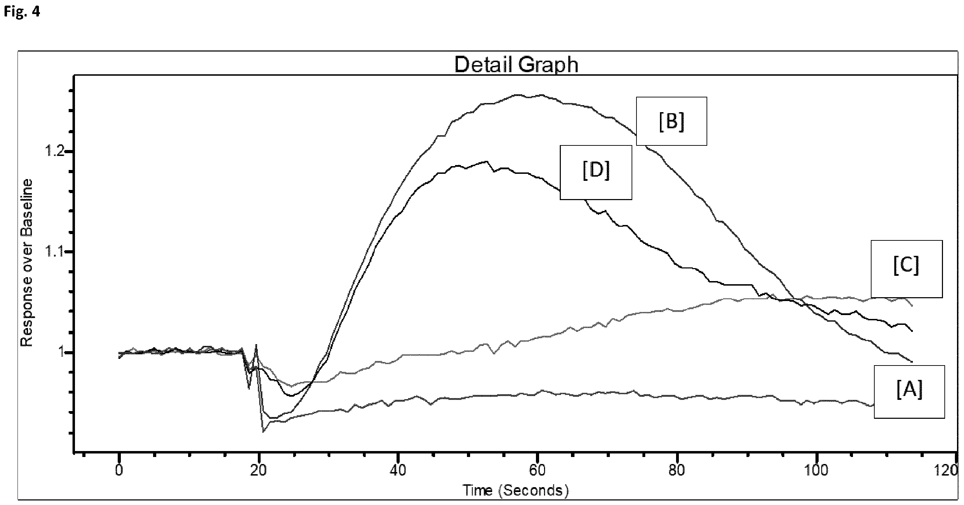

**Fig. 4** shows original data illustrating the measurements which are shown as diagramms in Fig. 1-3. Fig. 4 shows the mobilization of intracellular calcium over time by stimulation at 20 seconds: [A] 25mM sucrose, [B] 25mM sucrose + 20mg/l brazzein, [C] 20mg/l brazzein, [D] positive control (advantame, 1 $\mu$M).

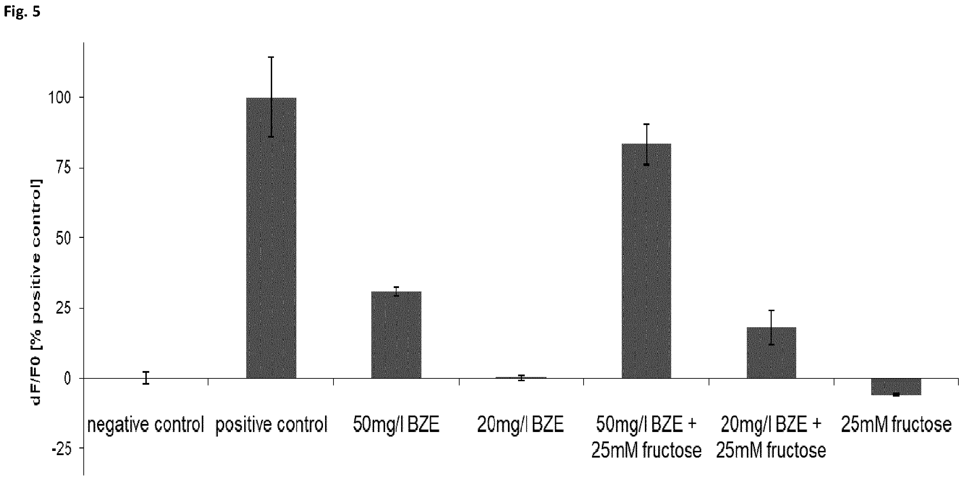

**Fig. 5** shows recombinant brazzein in combination with fructose. **Fig. 5** shows a strong increase of calcium mobilization by application of 50 mg/L or 20 mg/L brazzein plus 25 mM fructose. Comparing the calcium mobilization induced by the molecules alone it is evident that the effect is more than additive, showing a strong enhancement effect in vitro.

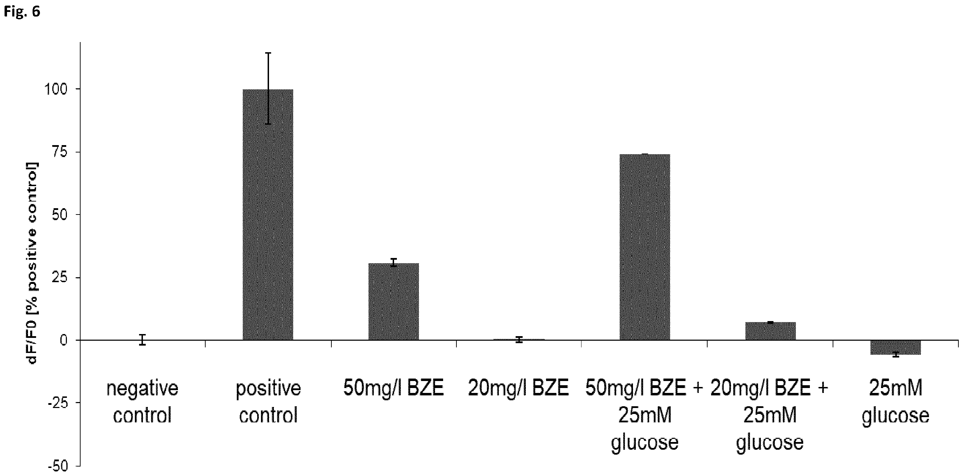

**Fig. 6** shows recombinant brazzein in combination with glucose. **Fig. 6** shows a strong increase of calcium mobilization by application of 50 mg/L or 20 mg/L brazzein plus 25 mM glucose. Comparing the calcium mobilization induced by the molecules alone it is evident that the effect is more than additive, showing a strong enhancement effect in vitro.

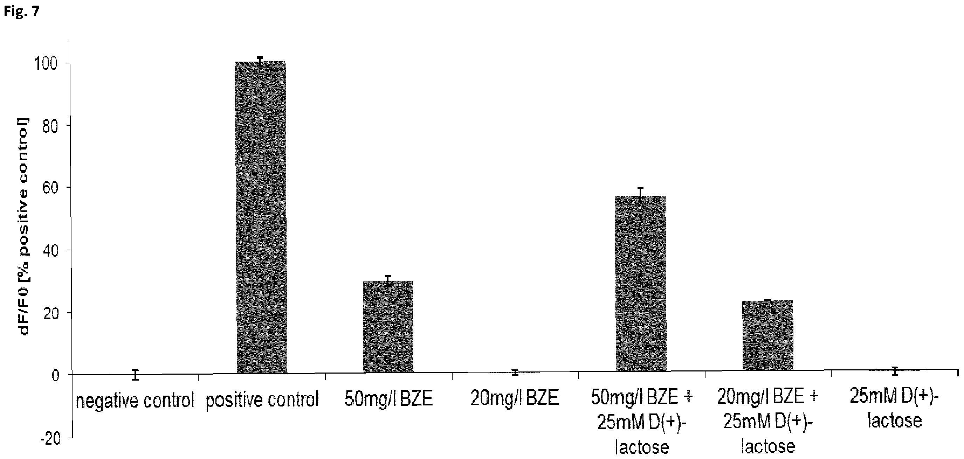

**Fig. 7** shows recombinant brazzein in combination with D(+)-Lactose. **Fig. 7** shows a strong increase of calcium mobilization by application of 50 mg/L or 20 mg/L brazzein plus 25 mM D(+)-Lactose. Comparing the calcium mobilization induced by the molecules alone it is evident that the effect is more than additive, showing a strong enhancement effect in vitro.

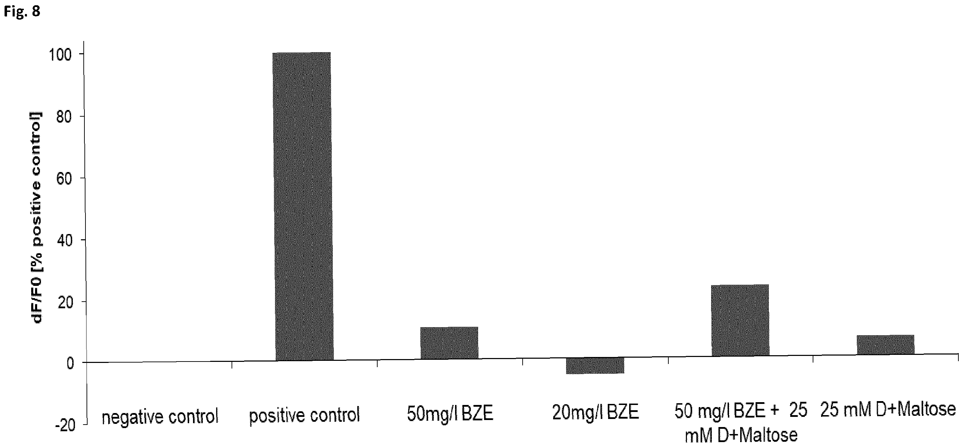

**Fig. 8** shows recombinant brazzein in combination with maltose. **Fig. 8** shows a strong increase of calcium mobilization by application of 50 mg/L or 20 mg/L brazzein plus 25 mM maltose. Comparing the calcium mobilization induced by the molecules alone it is evident that the effect is more than additive, showing an enhancement effect in vitro.

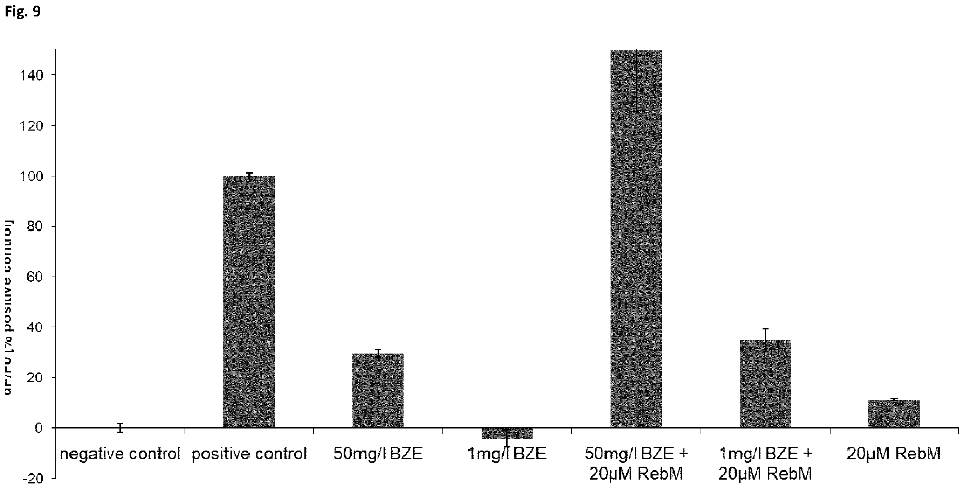

**Fig. 9** shows recombinant brazzein in combination with rebaudioside M. **Fig. 9** shows a strong increase of calcium mobilization by application of 50 mg/L or 1 mg/L brazzein plus 20 $\mu$M RebM. Comparing the calcium mobilization induced by the molecules alone it is evident that the effect is more than additive, showing a strong enhancement effect in vitro.

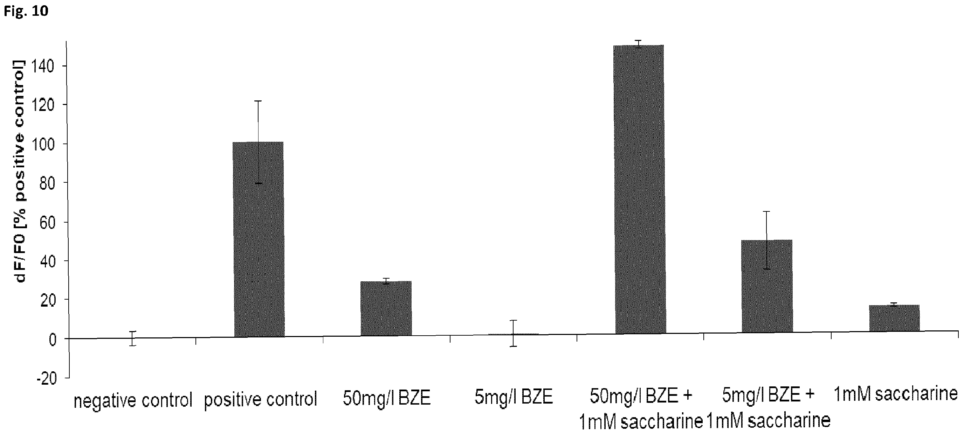

**Fig. 10** shows recombinant brazzein in combination with saccharine. **Fig. 10** shows a strong increase of calcium mobilization by application of 50 mg/L or 5 mg/L brazzein plus 1 mM saccharine. Comparing the calcium mobilization induced by the molecules alone it is evident that the effect is more than additive, showing a strong enhancement effect in vitro.

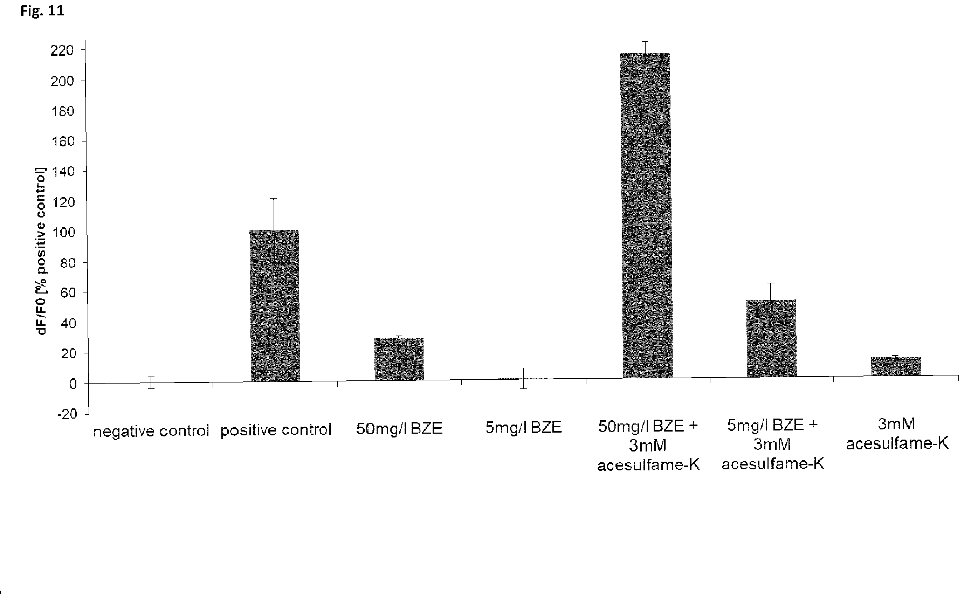

**Fig. 11** shows recombinant brazzein in combination with acesulfame K. **Fig. 11** shows a strong increase of calcium mobilization by application of 50 mg/L or 5 mg/L brazzein plus 3 mM acesulfame K. Comparing the calcium mobilization induced by the molecules alone it is evident that the effect is more than additive, showing a strong enhancement effect in vitro.

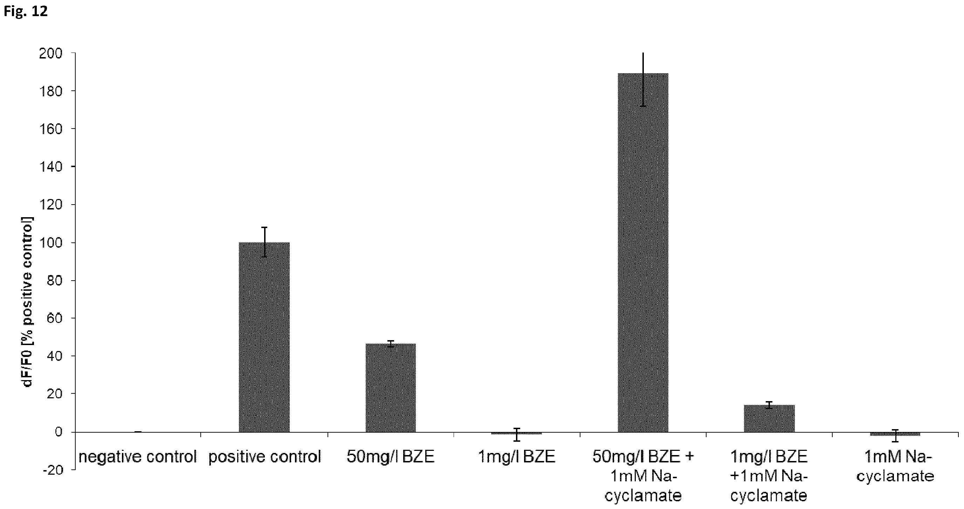

**Fig. 12** shows recombinant brazzein in combination with Na-cyclamate. **Fig. 12** shows a strong increase of calcium mobilization by application of 50 mg/L or 1 mg/L brazzein plus 1 mM Na-cyclamate. Comparing the calcium mobilization induced by the molecules alone it is evident that the effect is more than additive, showing a strong enhancement effect in vitro.

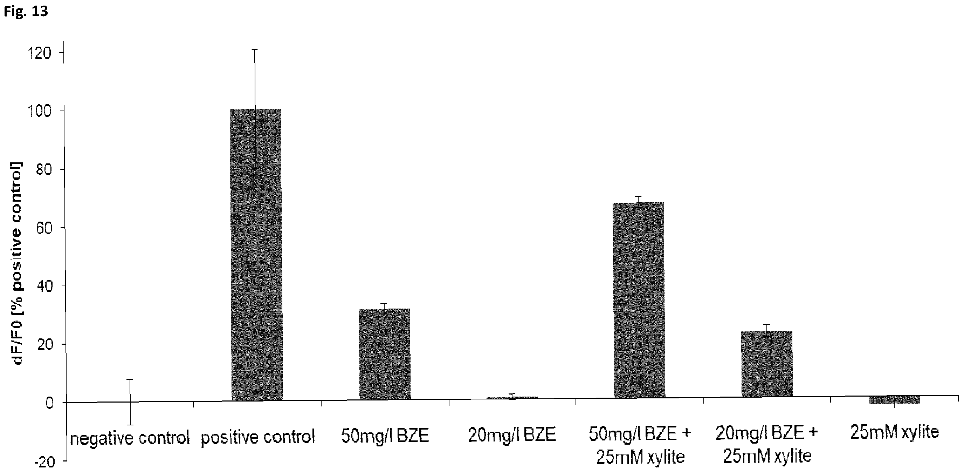

**Fig. 13** shows recombinant brazzein in combination with xylite. **Fig. 13** shows a strong increase of calcium mobilization by application of 50 mg/L or 20 mg/L brazzein plus 25 mM xylite. Comparing the calcium mobilization induced by the molecules alone it is evident that the effect is more than additive, showing a strong enhancement effect in vitro.

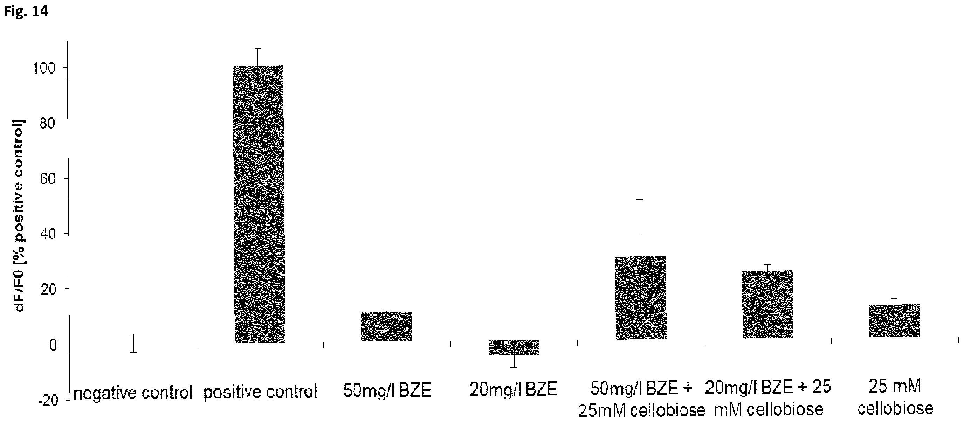

**Fig. 14** shows recombinant brazzein in combination with cellobiose. **Fig. 14** shows no significant increase of calcium mobilization by application of 50 mg/L or 20 mg/L brazzein plus 25 mM cellobiose.

Figures 1 to 13 show the enhancement of the calcium mobilization induced by carbohydrate sugars (sucrose, fructose, glucose, maltose, lactose), sweeteners (Acesulfame K, saccharine, Na-cyclamate, sucralose, advantame), natural sweeteners (RebM) and sugar alcohol (xylit) with increasing brazzein concentrations.

The selected brazzein concentrations were in the range of the detection threshold of the assay. We thus have demonstrated that brazzein shows an allosteric modulation (enhancement) of the sweet taste cell model.

The negative control cellobiose (non-sweet carbohydrate) was not enhanced being indicative for a specific enhancement of sweet molecules only.

**Example 3: Sweetness enhancement by recombinant brazzein in vivo**

Psychophysical test protocol: Up to thirteen healthy volunteers without taste pathologies (7 female, 5 male; age range 29-56 years, mean age 39.0 years, SD=7.9) participated in the trial. All subjects provided written informed consent before the experiment. Subjects were advised to waive eating and drinking except water 1 hour before the tests. All subjects participated in several sessions. All samples were dissolved and presented in mineral water (Evian; Danone, France). Coded samples with a volume of 3 mL each were provided in 5 mL tubes (Eppendorf AG) and assessed in a sip and spit procedure. After assessment of one sample set the subjects had to rinse their mouth with mineral water.

To evaluate potential sweetness enhancement, Brazzein was tested at subthreshold concentrations (no sweetness) in combination with 6% sucrose.

Sweet taste recognition threshold of brazzein: To determine subthreshold concentrations of brazzein taste recognition thresholds were assessed by using the three alternative forced choice (3-AFC) method. One 3-AFC presentation consisted of 3 vials: 2 blank vials with mineral water and one test vial with one concentration of a tastant, which was randomly presented. Lowest concentration was presented first.

Panelists: 13
Method: 3-AFC, 12 ascending concentrations
Concentration range of brazzein: 0.025 - 51.2 mg/l
Geometric progression: factor of 2

**Table 9: Concentration steps of 3-AFC and correct answers for brazzein**

| Conc. step | 1.6 mg/l | 3.2 mg/l | 6.4 mg/l | 12.8 mg/l |
|---|---|---|---|---|
| Panelists recognizing sweetness | 0 of 13 (0 %) | 9 of 13 (69 %) | 12 of 13 (92%) | 13 of 13 (100 %) |

Taste recognition threshold was derived by plotting percentage of correct answers at concentration steps versus log10 concentrations. Concentration was calculated at 50% detection level using regression curve.

The recognition threshold for brazzein was 2.9 mg/L.

For detection of enhancement, 1.6 mg/L brazzein was selected, as no panelist perceives sweetness at this level.

Test of sweet taste enhancement of sucrose by brazzein: To determine sweet taste enhancement of brazzein two alternative forced choice (2-AFC) method was used. One 2-AFC presentation consisted of 2 vials: 1 vials with 6% sucrose only and one test vial with 6% sucrose including brazzein at the subthreshold concentration 1.6 mg/L. Vials were coded and randomly presented.

Panelists: 12
Method: 2-AFC
Concentration sucrose: 6% (w/w) (typical concentration in sweetened beverages)
Concentration brazzein: 1.6 mg/l (below recognition threshold)
Procedure: Comparison of 6% sucrose with 6 % sucrose + 1.6 mg/l brazzein

Result: 9 of 12 panelists rated samples with 1.6 mg/L brazzein as sweeter, which corresponds to a significance level p=0.1.

The combination of sucrose with recombinant brazzein was sweeter than sucrose alone, showing a significant enhancement effect of brazzein at a subthreshold concentration.

Descriptive analysis of sweetness quality in mixtures of brazzein and sucrose

In addition to 2-AFC test, panelists documented overall impression of mixtures of brazzein with sucrose.

Test solutions containing both, sucrose and brazzein at subthreshold as well as at higher concentrations were described as more round, increased mouthfeel, softness and more pleasant than sucrose solutions alone.

A synergistic effect was evident in mixtures containing brazzein and a sweet molecule.

## Claims

**1.** Use of brazzein for synergistically enhancing the sweet taste and/or the sweetness quality of a sweet-tasting substance in a preparation comprising a sweet-tasting substance selected from the group consisting of sucrose, sucralose, acesulfam-K, Na-cyclamate, saccharin, glucose, fructose, lactose or xylit, wherein the concentration of brazzein is from about 1 mg/L to about 100 mg/L, based on the total preparation

**2.** Use according to claim 1, wherein said preparation is a beverage, a pharmaceutical, a nourishment, an oral hygiene product, a foodstuff or a consumption preparation.

## Patentansprüche

**1.** Verwendung von Brazzein zur synergistischen Verstärkung des süßen Geschmacks und/oder der Süßqualität einer süß schmeckenden Substanz in einer Zubereitung, die eine süß schmeckende Substanz umfasst, die aus der Gruppe ausgewählt ist, die Saccharose, Sucralose, Acesulfam-K, Na-Cyclamat, Saccharin, Glucose, Fructose, Lactose oder Xylit umfasst, wobei die Konzentration von Brazzein von etwa 1 mg/L bis etwa 100 mg/L, bezogen auf die gesamte Zubereitung, beträgt

**2.** Verwendung nach Anspruch 1, wobei es sich bei der Zubereitung um ein Getränk, ein Arzneimittel, ein Nahrungsmittel, ein Mundhygieneprodukt, ein Lebensmittel oder eine Zubereitung zum Verzehr handelt.

**Revendications**

1. Utilisation de la brazzéine pour améliorer de manière synergique le goût sucré et/ou la qualité sucrée d'une substance au goût sucré dans une préparation comprenant une substance au goût sucré choisie dans le groupe comprenant en saccharose, sucralose, acésulfam-K, Na-cyclamate, saccharine, glucose, fructose, lactose ou xylit, dans laquelle la concentration de brazzéine est d'environ 1 mg/L à environ 100 mg/L, sur la base de la préparation totale.

2. Utilisation selon la revendication 1, dans laquelle ladite préparation est une boisson, un produit pharmaceutique, un aliment, un produit d'hygiène buccale, une denrée alimentaire ou une préparation pour la consommation.

FIGURES

Fig. 1

Fig. 2

EP 3 915 397 B1

Fig. 3

Fig. 4

Detail Graph

Fig. 5

EP 3 915 397 B1

Fig. 6

**Fig. 7**

Fig. 8

EP 3 915 397 B1

EP 3 915 397 B1

**Fig. 9**

Fig. 10

Fig. 11

Fig. 12

EP 3 915 397 B1

Fig. 13

EP 3 915 397 B1

**Fig. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9820753 A
- US 3924017 A
- WO 2016103163 A
- WO 0061759 A
- US 7153535 B
- WO 9419467 A
- WO 9531547 A
- US 9404080 B2

**Non-patent literature cited in the description**

- *FOOD SCI. TECHNOL.,* 2018, vol. 38 (2), 181-187
- **HOCHHEIMER et al.** *Chem. Senses.,* May 2014, vol. 39 (4), 359-77